# EUROPÄISCHE PATENTSCHRIFT

(11) **EP 2 107 983 B1**
(45) Veröffentlichungstag und Bekanntmachung des Hinweises auf die Patenterteilung: **15.09.2010**
(21) Anmeldenummer: 07856670.0
(22) Anmeldetag: 13.12.2007
(51) Int. Cl.: B62D 1/19

(54) **LENKSÄULE MIT CRASHEINRICHTUNG**
STEERING COLUMN WITH CRASH DEVICE
COLONNE DE DIRECTION AVEC DISPOSITIF DE PROTECTION CONTRE LES COLLISIONS

(30) Priorität: 09.01.2007 DE 102007002091
(43) Veröffentlichungstag der Anmeldung: 14.10.2009
(73) Patentinhaber: ThyssenKrupp Presta Aktiengesellschaft, 9492 Eschen (LI)
(72) Erfinder: SCHNITZER, Rony, FL-9491 Ruggell (LI); ROHR, Martin, A-6971 Hard (AT)
(74) Vertreter: Adams, Steffen
(86) Internationale Anmeldenummer: PCT/EP2007/010924
(87) Internationale Veröffentlichungsnummer: WO 2008/083811

(56) Entgegenhaltungen:
- EP-A- 0 713 820
- EP-A- 0 936 130
- DE-A1- 10 025 980

## Beschreibung

Die Erfindung betrifft eine Lenksäule für ein Kraftfahrzeug, die mit einer Einrichtung ausgerüstet ist, durch die im Crashfall die kinetische Energie aufgezehrt wird, die bei einer durch den Crash hervorgerufenen Relativbewegung eines Stellteils gegenüber einem Halteteil der Lenksäule hervorgerufen wird.

Im Falle eines Unfalls (Crashfall) wird der Fahrer eines Kraftfahrzeuges in Richtung Lenkrad beschleunigt und er prallt auf das Lenkrad auf. Die Stoßenergie dieses Aufpralls wirkt auf die Lenksäule ein. Weicht die Lenksäule unter dem Einfluss der Stoßenergie nicht zurück, sondern bleibt sie starr ortsfest, so ist das Verletzungsrisiko für den Fahrer hoch. In dem Bestreben, die Sicherheit für den Fahrer im Crashfall zu erhöhen und das Verletzungsrisiko zu reduzieren, sind Lenksäulen vorgeschlagen worden, die unter dem Einfluss der Stoßenergie zurückweichen, sodass der Aufprall des Fahrers weicher ist. Das Zurückweichen der Lenksäule wird dadurch ermöglicht, dass eine bestimmte Bauteilgruppe der Lenksäule sich relativ zu der fest mit dem Fahrzeug verbundenen Lenksäulenhalterung verschiebt. Es ist in diesem Zusammenhang bereits bekannt, bei derartigen Lenksäulen Einrichtungen (so genannte Crashelemente) vorzusehen, welche die kinetische Energie der bewegten Lenksäulenbaugruppe in Verformungsarbeit umsetzen und so Energie abbauen.

Entsprechende Lenksäulen mit Crasheinrichtungen zur Energieaufzehrung sind in unterschiedlichen Ausführungsformen aus dem Stand der Technik bekannt. Aus der DE 694 16 261 T2 ist ein System bekannt, bei dem zwischen einer konsolenförmigen Halterung und einem Rohrkörper, in welchem die Lenkspindel drehbar gelagert ist, ein zusätzliches Verformungselement vorgesehen ist, welches im Crashfall unter Energieaufzehrung umgeformt wird. Bei dieser bekannten Lenksäule weist der Rohrkörper Durchlässe auf, durch die ein Verriegelungssystem verläuft, mit dem der Rohrkörper in einer Halterung verriegelt werden kann. Die Durchlässe des Rohrkörpers weisen jeweils einen Auslass auf, welcher in der Richtung des Lenkrades des Fahrers derart angeordnet ist, dass der Rohrkörper sich im Falle eines Stoßes von dem Verriegelungssystem lösen kann. Bei dieser Bewegung wird ein Ende mindestens einer Mitnehmerstange mitbewegt, während das andere Ende der Mitnehmerstange mit der Halterung verbunden ist. Auf diese Weise wird durch die Bewegung des Rohrkörpers eine Verformung der Mitnehmerstange herbeigeführt, durch die Energie aufgezehrt wird. Die Mitnehmerstange wirkt auf diese Weise als Energie absorbierendes Verformungselement.

Nachteilig bei dieser bekannten Lenksäule ist einerseits, dass das Verformungselement außenseitig an der Lenksäule angebracht ist, da hierdurch der zur Unterbringung der Lenksäule erforderliche Bauraum vergrößert wird. Nachteilig ist weiterhin, dass das Verformungselement einerseits mit dem Rohrkörper und andererseits mit der Halterung verbunden sein muss, weil dies den Montageaufwand erhöht. Darüber hinaus ist nachteilig, dass das Verformungselement als separates zusätzliches Bauteil ausgebildet ist, sodass sich die Teileanzahl der Lenksäule erhöht.

In der EP 0 713 820 B1 werden verschiedene Ausführungsformen für eine Energie absorbierende Einrichtung für eine Kraftfahrzeuglenksäule beschrieben. Allen Ausführungsformen ist gemeinsam, dass zwei zueinander konzentrisch angeordnete und ineinander verschiebbare Rohre vorgesehen sind, nämlich eine Außenrohr und ein darin verschiebbar angeordnetes Innenrohr. Die Rohre treten in einem Crashfall zum Zweck der Energieabsorption miteinander in Wechselwirkung. Gemäß einer der beschriebenen Ausführungsformen sind auf der Innenseite des Außenrohres Eindrückungen vorgesehen, welche mit der Außenseite des Innenrohres zusammenarbeiten. Gemäß der Lehre der EP 0 713 820 B1 werden einerseits verschiedene Merkmale der Eindrücken und andererseits verschiedene Merkmale der Seite des Rohres, mit der die genannten Eindrückungen zusammenarbeiten, in Beziehung aufeinander ausgewählt und angepasst. So ist in dem vorstehend angesprochenen Ausführungsbeispiel mit den Eindrückungen im Außenrohr vorgesehen, dass das Innenrohr eine radiale Durchmesseraufweitung aufweisen muss, um mit den radial nach innen vorstehenden Eindrückungen zusammenarbeiten zu können. Als Innenrohr kann daher kein einfaches und kostengünstiges Rohr mit konstantem Durchmesser verwendet werden. Da gemäß EP 0 713 820 B1 sowohl die Merkmale der Eindrückungen als auch die Merkmale der mit den Eindrückungen zusammenarbeitenden Seite des anderen Rohrs aneinander angepasst werden müssen, ist diese Lösung konstruktiv aufwendig und verursacht erhöhte Kosten.

Der Erfindung liegt die Aufgabe zugrunde, eine verstellbare, im Crashfall unter dem Einfluss der Stoßenergie eines aufprallenden Fahrers zurückweichende Lenksäule mit einer Einrichtung anzugeben, welche die Stoßenergie absorbiert und in Verformungsarbeit umsetzt, wobei die Einrichtung konstruktiv einfach ausgebildet ist und die Lenksäule mit wenigen Bauteilen auskommt. Weiterhin soll durch die Erfindung erreicht werden, dass durch die Energieabsorptionseinrichtung keine Erhöhung des benötigten Einbauraumes für die Lenksäule in radialer Richtung erforderlich ist.

Diese Aufgabe wird gelöst durch eine Lenksäule mit den Merkmalen des Patentanspruchs 1 oder 2. Vorteilhafte Weiterbildungen der erfindungsgemäßen Lenksäule sind in den Unteransprüchen angegeben.

Bei der erfindungsgemäßen Lenksäule ist in der ersten Ausführungsform ein ausgehend vom Halteteil in Richtung Stellteil und damit radial nach innen vorstehendes Crashelement vorgesehen, welches bei einer im Crashfall auftretenden Relatiwerschiebung zwischen dem Stellteil und dem Halteteil unter Energieabbau von dem Stellteil entweder selbst verformt wird und/oder das Halteteil in der Umgebung des Crashelements verformt. In einer zweiten Ausführungsform ist bei der erfindungsgemäßen Lenksäule ein ausgehend vom Stellteil in Richtung Halteteil und damit radial nach außen vorstehendes Crashelement vorgesehen, welches bei einer im Crashfall auftretenden Relatiwerschiebung zwischen dem Stellteil und dem Halteteil unter Energieabbau entweder selbst verformt wird und/oder das Stellteil in der Umgebung des Crashelements verformt. Dadurch ist der von der erfindungsgemäßen Lenksäule benötigte radiale Bauraum genauso groß wie derjenige einer baugleichen Lenksäule, die keine Einrichtung zur Absorbierung von Stoßenergie im Crashfall aufweist. Denn bei der Erfindung beanspruchen die Crashelemente keinen zusätzlichen Bauraum außerhalb der Lenksäule.

Grundsätzlich kann die Erfindung bei nicht verstellbaren Lenksäulen eingesetzt werden, bei denen es nur im Crashfall zu einer Relatiwerschiebung zwischen dem die Lenkspindel aufnehmenden Bauteil und dem mit dem Fahrzeugaufbau verbundenen Halteteil kommt. Insbesondere ist die Erfindung auf zumindest in einer Verstellrichtung verstellbare Lenksäulen anwendbar, bei denen eine öffen- und schließbare Klemmeinrichtung, vorgesehen ist, wobei das Stellteil relativ zu dem Halteteil bei geöffneter Klemmeinrichtung in axialer Richtung verschiebbar und bei geschlossener Klemmeinrichtung axial fixiert gehalten ist.

Das Crashelement ist erfindungsgemäß an mindestens einer Wandfläche des Halteteils oder des Stellteils angeordnet und im Crashfall wird das Stellteil relativ zu dem Halteteil in axialer Richtung aufgrund der einwirkenden Stoßkraft geführt verschoben. Auf diese Weise kann die gerichtete Bewegung des Stellteils für die Verformung des Crashelementes und/oder für die Verformung des Halteteils bzw. des Stellteils ausgenutzt werden, sodass die kinetische Energie des Stellteils in Verformungsarbeit umgesetzt wird. Das der Wandfläche mit dem Crashelement zugeordnete Widerstandselement des Stellteils bzw. des Halteteils wirkt während der Relativverschiebung auf das Crashelement ein und verformt dieses und/oder die Umgebung der Wandfläche, in der das Crashelement angeordnet ist.

Zu bevorzugen ist die Anordnung des Crashelements in einer Außenfläche am Halteteil, weil dort die Steifigkeit und damit die Verformung und damit auch die Höhe und der Verlauf der Energieabsorption einfach beeinflusst werden kann und die Anordnung einfach erfolgen kann.

Grundsätzlich kann das Crashelement als von dem Halteteil bzw. Stellteil getrenntes separates Bauteil, beispielsweise als Blechbiegeteil oder Kunststoffformelement, ausgebildet sein. In diesem Fall kann das Crashelement stoffschlüssig, kraftschlüssig und/oder formschlüssig mit der Wandfläche des Halteteils oder Stellteils verbunden sein. Zur Aufnahme des Crashelementes an der Wandfläche können in die Wandfläche Vertiefungen eingebracht sein, in die das Crashelement eingesetzt und darin fixiert wird. Die Fixierung des Crashelementes in derartigen Vertiefungen kann beispielsweise auch durch Kleben, Löten oder durch Nieten erfolgen.

Gemaβ einer bevorzugten Ausführungsform der Erfindung ist das Crashelement als in die Wandfläche eingeformte Crashsicke ausgebildet. Diese Ausführungsform hat den Vorteil, dass keine separaten Bauteile benötigt werden. Das Crashelemente ist bei dieser Ausführungsform vielmehr als integraler Bestandteil der Wandfläche ausgebildet und bildet mit diesem eine Einheit. Der mit dem Verbinden eines separaten Crashelementes mit der Wandfläche verbundene zusätzliche Montageaufwand entfällt bei dieser Ausführungsform.

Zusätzlich zu dem Crashelement kann die mindestens eine Wandfläche, an der das Crashelement angeordnet ist, eine Verstärkungssicke aufweisen. Diese zusätzlichen Verstärkungssicken sorgen dafür, dass die Verformung der Umgebung des Wandflächenbereiches eingeschränkt wird. Beispielsweise wird bei der Anordnung des Crashelements im Halteteil, in dem das Stellteil bei einer Relativbewegung geführt ist, die Aufbiegung des Halteteils verringert. Zusätzlich zu den Verstärkungssicken können auch weitere Verstärkungen, wie z.B. eine Verstärkungshülse, vorgesehen sein.

Gemäß einer Weiterentwicklung der Erfindung weist das Crashelement eine über seine Längserstreckung sich verändernde Querschnittsform auf. Auf diese Weise kann gezielt beeinflusst werden, welche Energiemenge im Crashfall durch das Crashelement aufgezehrt wird. Dabei kann, der Verlauf der Widerstandskraft gegen die Verschiebung des Stellteils gegenüber dem Halteteil in Abhängigkeit vom Verschiebeweg eingestellt werden.

Gemäß einer bevorzugten Ausführungsform der Erfindung mit über seine Längserstreckung eine sich verändernde Querschnittsform aufweisendem Crashelement weist das Crashelement an seinem dem Stellteil bzw. dem Halteteil zugewandten Ende eine Auflauframpe auf. Durch diese Auflauframpe wird der Grad der Umformung und damit der Grad der Energieabsorption bei einer Relativbewegung zwischen Stellteil und Halteteil allmählich und kontrolliert erhöht. Gleichzeitig erleichtert die Auflauframpe die Aufschiebebewegung des Stellteils bzw. des Halteteils auf das Crashelement.

Die Auflauframpe mündet gemäß einer Weiterentwicklung der Erfindung in einem First, welcher die höchste Erhebung des Crashelementes gegenüber der Wandfläche des Halteteils bildet. An den First, d.h. an die höchste Erhebung des Crashelementes, schließt sich nach einer bevorzugten Ausführungsform der Erfindung eine abfallende Stützrampe an. Die Stützrampe dient einer zusätzlichen Versteifung der Anordnung, analog der Einbringung einer zusätzlichen Verstärkungssicke. Durch den Anstellwinkel der Stützrampe kann beeinflusst werden, wie weit bei einer bestimmten Crashbelastung das Stellteil oder alternativ das Halteteil auf das Crashelement aufgeschoben werden kann, d.h. die bei einer gegebenen Stoßenergie durch das Crashelement absorbierbare Energiemenge kann durch die Ausbildung der Stützrampe beeinflusst werden. Ein konstruktiv zu variierender Parameter in Bezug auf die Auslegung der Stützrampe ist somit, wie gesagt, der Anstellwinkel (d.h. der Winkel, den die Stützrampe mit der Wandfläche des Halteteils einschließt), jedoch kann die Wirkung der Stützrampe z.B. auch durch die Materialstärke des Crashelementes im Bereich der Stützrampe gezielt beeinflusst werden.

Gemäß einer vorteilhaften Ausführungsform der Erfindung weist das Stellteil eine oktogonale Querschnittsform auf, während das Halteteil eine im Wesentlichen U-förmige Querschnittsform aufweist. In diesem Fall bildet die Wandfläche, welche das Crashelement aufweist, einen Schenkel des U-förmigen Halteteils. Bei dieser Ausführungsform der Erfindung können problemlos anstelle eines einzigen Crashelementes auch zwei, drei oder nochmehr Crashelemente an den jeweiligen Wandflächen des Halteteils vorgesehen sein. So kann beispielsweise ein zweites Crashelement an dem anderen Schenkel des U-förmigen Halteteils angeordnet werden. Alternativ oder zusätzlich kann ein weiteres Crashelement auch an den die beiden U-Schenkel miteinander verbindenden Wandflächen angeordnet werden. Alternativ oder auch in Kombination mit den Crashelementen im Halteteil können ein oder mehrere Crashelemente in Wandflächenbereichen im Stellteil angeordnet sein.

Im Folgenden wird die Erfindung anhand einer Zeichnung näher erläutert. Es ist darauf hinzuweisen, dass die Erfindung grundsätzlich nicht beschränkt ist auf die im Ausführungsbeispiel dargestellte Konstruktion des Halteteils bzw. des Stellteils. So muss das Halteteil nicht, wie beim dargestellten Ausführungsbeispiel, zwingend als U-förmiges Blechbiegeteil ausgebildet sein, sondern das Halteteil kann auch aus zwei zueinander parallel angeordneten Wandflächen gebildet sein, die nicht miteinander verbunden sind. Ebenso kann das Stellteil nicht als Blechteil mit einem oktogonalen Querschnitt ausgebildet sein. Beispielsweise könnte das Stellteil auch als einfaches Vierkantrohr oder auch als rundes Rohr ausgebildet sein.

Es ist darüberhinaus auch möglich und denkbar, das Halteteil als Gussteil auszubilden und ein separates Crashelement in einer Wandfläche anzuordnen.

In der Zeichnung zeigen
- Fig. 1: eine erfindungsgemäße Lenksäule im zusammengebauten Zustand mit Crashelementen, die im Halteteil angeordnet sind;
- Fig. 2: die Lenksäule gemäß Fig. 1 in einer auseinander gezogenen Darstellung, in der die Hauptbaugruppen der Lenksäule getrennt voneinander darge- stellt sind;
- Fig. 3: eine hinsichtlich des Klemmsystems gegenüber Fig. 2 abgewandelte Aus- führungsform des gemäß der Erfindung ausgebildeten Halteteils;
- Fig. 4: eine Ansicht des gemäß der Erfindung ausgebildeten Halteteils, wobei die Blickrichtung des Betrachters von der geschlossenen Seite des U-förmi- gen Halteteils ausgehend parallel zu den U-Schenkeln gerichtet ist;
- Fig. 5: eine Seitenansicht des Halteteils gemäß Fig. 4;
- Fig. 6: eine gegenüber den Fig. 4 und 5 abgewandelte Ausführungsform des erfindungsgemäßen Halteteils in der Draufsicht;
- Fig. 7: einen Schnitt durch die Auflauframpe des Crashelementes;
- Fig. 8: einen Schnitt durch die höchste Erhebung (First) des Crashelementes;
- Fig. 9: einen Schnitt durch die Stützrampe des Crashelementes;
- Fig. 10: die zusammengebaute Lenksäule in ihrem axial kürzesten Zustand, d.h. mit maximal in das Halteteil eingeschobenem Stellteil;
- Fig. 11: die erfindungsgemäße Lenksäule nach einem Crashfall mit verformtem Crashelement und verformten Halteteil;
- Fig. 12: eine erfindungsgemäße Lenksäule im zusammengebauten Zustand mit Crashelementen, die im Stellteil angeordnet sind.

In allen Figuren sind zur Erzielung einer besseren Übersichtlichkeit Teile der Lenkwelle und die Befestigung der Lenksäule am Fahrzeug nicht dargestellt. Diese Elemente sind für die Erfindung nicht wesentlich.

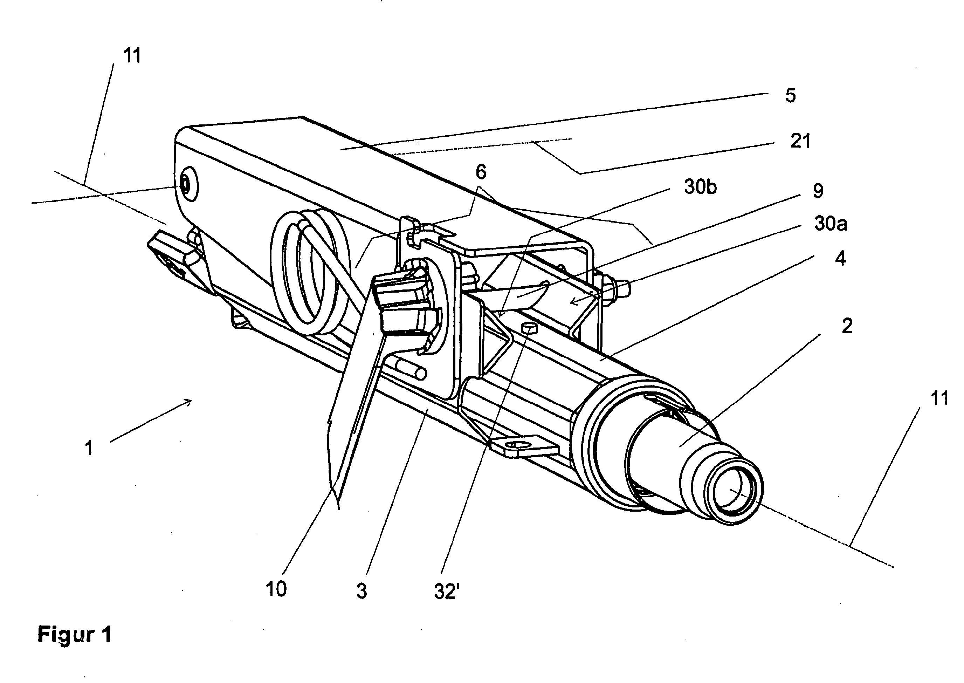

In Fig. 1 ist die erfindungsgemäße Lenksäule 1 in zusammengebautem Zustand dargestellt. Die Lenkspindel 2 ist in einem rohrförmigen Stellteil 4 drehbar gelagert angeordnet. Das Stellteil 4 weist eine oktogonale Querschnittsform auf. Das Stellteil 4 ragt mit einem Ende in das Halteteil 3 hinein, welches U-förmig ausgebildet ist. An den Innenseiten der U-Schenkel sind Klemmelemente 30a, 30b angeordnet, die winkelförmig ausgebildet sind und mit den ebenen Außenflächen des oktogonalen Stellteils 4 zusammenwirken. Die U-Schenkel des Halteteils 3 sind über eine Klemmeinrichtung 6 miteinander gekoppelt. Die Klemmeinrichtung 6 umfasst einen Stellhebel 10, einen Spannbolzen 9 und die Klemmelemente 30a, 30b. Durch eine Bewegung des Stellhebels 10 können die U-Schenkel des Halteteils 3 aufeinander zubewegt werden, sodass die Klemmelemente 30a, 30b das Stellteil 4 festklemmen und in einer axial fixierten Position festhalten. Entsprechend ist mit der öffen- und schließbare Klemmeinrichtung 9, 10, 30a, 30b das Stellteil 4 relativ zu dem Halteteil 3 bei geöffneter Klemmeinrichtung 9, 10, 30a, 30b, in axialer Richtung verschiebbar und bei geschlossener Klemmeinrichtung 9, 10, 30a, 30b axial fixiert gehalten.

Das Halteteil 3 ist in einer Halteklammer 5 angeordnet. Dabei ist das Halteteil 3 über die Schwenkachse 21 schwenkbar mit der Halteklammer 5 verbunden. Die Halteklammer 5 ist über nicht dargestellte Befestigungselemente mit dem nicht dargestellten Fahrzeugaufbau verbunden.

Im Fall eines Crashes wird der Fahrer auf das Steuerrad seines Fahrzeugs geschleudert und übt auf diese Weise einen Stoß entlang der Längsachse 11 der Lenkspindel 2 auf das Stellteil 4 aus. Durch diesen Stoß wird das Stellteil 4 relativ zum Halteteil 3 axial verschoben. Ziel der Erfindung ist es, die kinetische Energie des Stellteils 4 bei dieser Relatiwerschiebung auf schonende Weise abzubauen, sodass der Aufprall des Fahrers weicher ist. Dadurch sollen schwere Verletzungen des Fahrers verhindert werden.

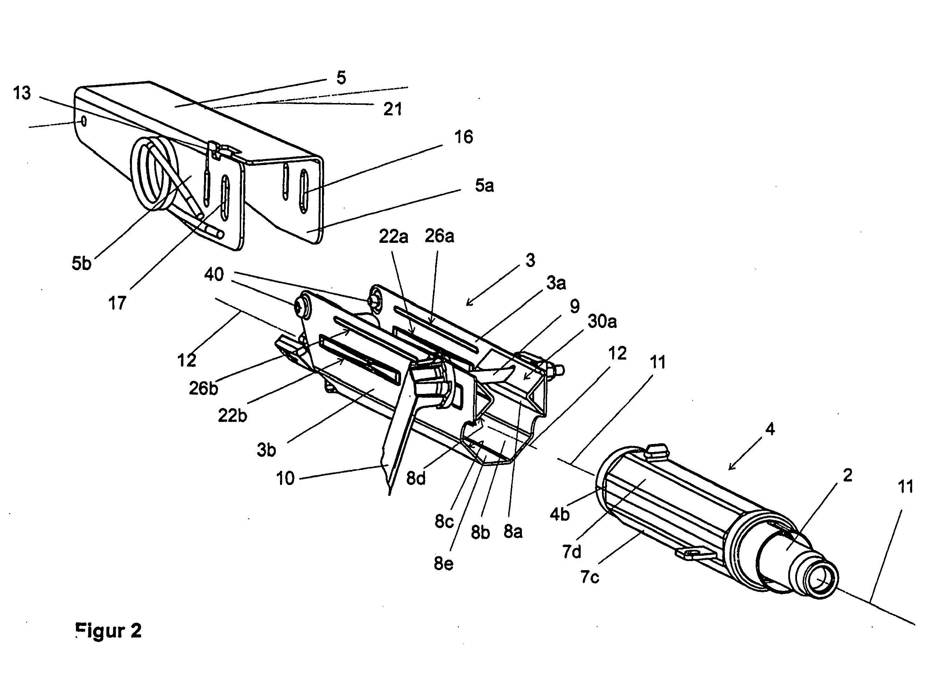

In Fig. 2 ist die Lenksäule gemäß Fig. 1 in einer Explosionsdarstellung gezeigt. Zu erkennen ist die im eingebauten Zustand mit dem Fahrzeugaufbau verbundene Halteklammer 5. Diese Halteklammer 5 ist U-förmig ausgebildet und weist zwei Seitenwangen 5a, 5b auf. In den Seitenwangen 5a, 5b sind Langlöcher 16, 17 vorgesehen, welche eine Winkelverstellung der Lenksäule um die Schwenkachse 21 ermöglichen, damit die Höhe des Steuerrades des Fahrzeugs eingestellt werden kann.

Das Stellteil 4, in dem die Lenkspindel 2 drehbar gelagert ist, weist aufgrund seines oktogonalen Querschnittes über den Umfang verteilt acht ebene Flächenabschnitte auf. Mit den Bezugszeichen 7c, 7d sind beispielhaft zwei dieser ebenen Flächenabschnitte bezeichnet. Im zusammengebauten Zustand der Lenksäule wirkt der ebene Flächenabschnitt 7d mit dem Klemmelement 8d des Halteteils 3 klemmend zusammen.

Das in Fig. 2 dargestellte Halteteil 3 weist an seinem einen Ende die den Steilhebel 10, den Spannbolzen 9 und die Klemmelemente 30a, 30b umfassende Klemmeinrichtung 6 auf. Am anderen Ende des Halteteils 3 sind Aufnahmezapfen 40 vorgesehen, mit denen das Halteteil 3 in der Halteklammer 5 schwenkbar befestigt werden kann, sodass das Halteteil 3 in der Halteklammer 5 um die Schwenkachse 21 schwenkbar angeordnet ist.

Das Halteteil 3 ist als im Wesentlichen U-förmiges Blechbiegeteil ausgebildet. Die U-Schenkel des Halteteils 3 werden durch Wandflächen 3a, 3b gebildet. In diese Wandflächen sind die erfindungsgemäßen Crashelemente in Form von Crashsicken 22a, 22b eingeformt. Zusätzlich zu den Crashsicken 22a, 22b sind in die Wandflächen 3a, 3b Verstärkungssicken 26a, 26b eingebracht, die ein Aufbiegen des Halteteils 3 während des Crashes zusätzlich erschweren, was gleichbedeutend mit der Erhöhung des Energiebedarfs zur Verformung und Aufbiegung des Halteteils ist. Durch die Dimensionierung der Verstärkungssicken kann der Kraftverlauf über den Verschiebeweg im Crashfall eingestellt werden. Die Verstärkungssicken 26a, 26b können gleichzeitig als Führungselemente für die Verschiebebewegung des Stellteils 4 in dem Halteteil 3 dienen.

Im Bereich des die beiden Wandflächen 3a, 3b verbindenden Steges sind ebene Flächenabschnitte 8b, 8c und 8e ausgebildet, welche im zusammengebauten Zustand entsprechenden ebenen Flächenabschnitten des Stellteils 4 zugeordnet sind. Die Flächenabschnitte 8a, 8d der Klemmelemente 30a, 30b wirken klemmend mit zugeordneten ebenen Flächenabschnitten 7d des Stellteils 4 zusammen.

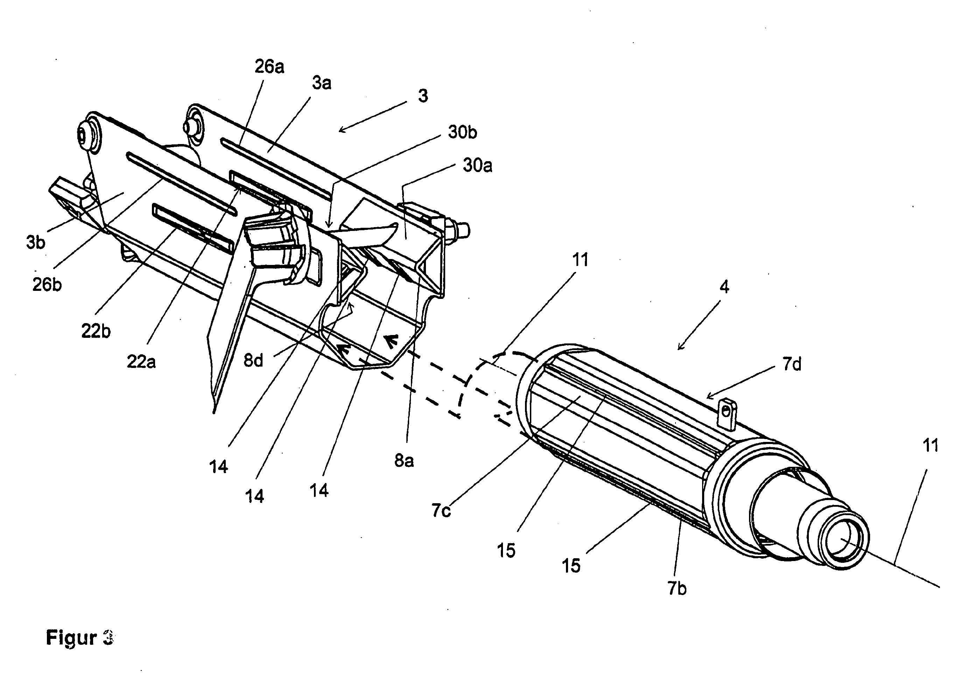

In Fig. 3 sind das Halteteil 3 und das Stellteil 4 in vergrößerter Darstellung gezeigt. Zur Erläuterung der unterschiedlichen Möglichkeiten des Festklemmens des Stellteils 4 in dem Halteteil 3 sind in Fig. 3 unterschiedliche Ausbildungsmöglichkeiten des Klemmsystems dargestellt. So weist das Klemmelement 30a auf seiner Klemmfläche 8a leistenartige Erhöhungen 14 auf, welche im Klemmzustand auf die zugeordnete ebene Fläche des Stellteils 4 einwirken. Auf diese Weise kann eine höhere Flächenpressung und im Vergleich zu einer einfachen ebenen Klemmfläche 8a eine verringerte Neigung zum "Anfressen" der beiden Bauteile erzielt werden. Alternativ können die Vorteile auch dadurch erreicht werden, dass auf einer ebenen Fläche des Stellteils 4 eine leistenartige Erhöhung 15 vorgesehen ist, welche mit der zugeordneten Klemmfläche 8d des Klemmelementes 30b zusammenwirkt. Die gestrichelt dargestellten Pfeile deuten an, wie das Stellteil 4 zum Zwecke des Zusammenbaus der Lenksäule in das Halteteil 3 eingeschoben wird. In den Wandflächen 3a, 3b des U-förmigen Halteteils 3 sind die Crashsicken 22a, 22b und die Verstärkungssicken 26a, 26b angeordnet.

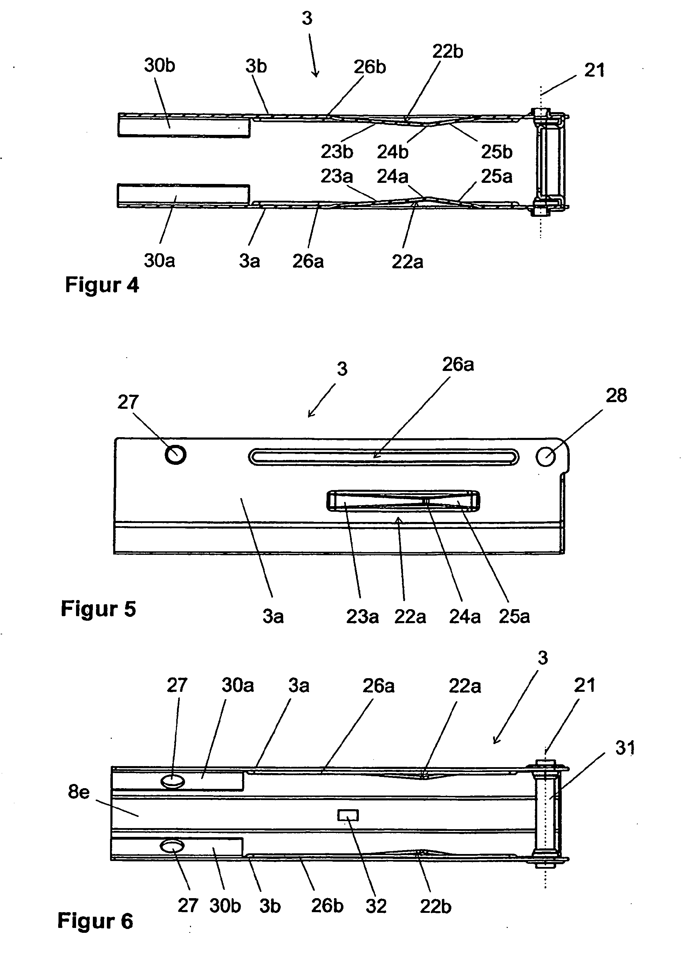

In Fig. 4 ist das gemäß der Erfindung ausgebildete Halteteil 3 dargestellt, wobei die Blickrichtung des Betrachters ausgehend vom geschlossenen Boden des U-förmigen Halteteils 3 in Richtung auf die Öffnung (nach oben) gerichtet ist. An den Wandflächen 3a, 3b sind innenseitig die Klemmelemente 30a, 30b angeordnet. Darüber hinaus sind in die Wandflächen 3a, 3b die Crashsicken 22a, 22b eingeformt. Die Crashsicken 22a, 22b sind somit integraler Bestandteil der Wandflächen 3a, 3b. Die auf diese Weise gebildeten Crashsicken erfordern kein separates Bauteil zur Energieabsorption im Crashfall.

Zusätzlich zu den Crashsicken 22a, 22b sind Verstärkungssicken 26a, 26b in die Wandflächen 3a, 3b eingebracht. An dem in Fig. 4 rechten Ende des Halteteils 3 sind nach außen gerichtete Ausstülpungen der Wandflächen 3a, 3b vorgesehen. Mit diesen Ausstülpungen kann das Halteteil 3 in der Halteklammer 5 (vgl. Fig. 1 und 2) schwenkbar befestigt werden, sodass das Halteteil 3 relativ zu der Halteklammer 5 um die Schwenkachse 21 verschwenkt werden kann.

Die Crashsicken 22a, 22b weisen eine sich in Axialrichtung verändernde Form auf. An dem der Schwenkachse 21 abgewandten Ende der Crashsicken 22a, 22b weisen diese zunächst einen rampenförmigen Abschnitt auf, der die Auflauframpe 23a, 23b bildet. An ihrer höchsten Erhebung gegenüber den Wandflächen 3a, 3b weisen die Crashsicken 22a, 22b jeweils einen First 24a, 24b auf. An diesen First schließt sich dann ein zweiter rampenartiger Abschnitt an, der die jeweilige Stützrampe 25a, 25b bildet. Je nachdem, an welcher Axialposition der First 24a, 24b liegt und in welchem Winkel die Stützrampen 25a, 25b relativ zur Wandfläche 3a, 3b verlaufen, kann die Crashsicke 22a, 22b ein unterschiedliches Absorptionsvermögen für die im Crashfall auftretende kinetische Energie besitzen.

Zur besseren Verständlichkeit ist in Fig. 5 das erfindungsgemäß ausgebildete Halteteil in der Seitenansicht dargestellt. Zu erkennen ist die Wandfläche 3a mit der Crashsicke 22a und der Verstärkungssicke 26a. Außerdem sind die Aussparungen 27 und 28 dargestellt. Die Aussparung 27 dient zur Durchführung des Spannbolzens 9 der Klemmeinrichtung 6, während die Aussparung 28 zur Aufnahme der Schwenkachse 21 dient. In Fig. 5 sind die unterschiedlich geformten Bereiche der Crashsicke 22a gut zu erkennen, nämlich die Auflauframpe 23a, die Stützrampe 25a und die zwischen den beiden rampenförmigen Abschnitten angeordnete höchste Erhebung, der First 24a.

In Fig. 6 ist das Halteteil gemäß den Fig. 4 und 5 in der Draufsicht dargestellt, d.h. die Blickrichtung des Betrachters ist von der offenen Seite des U-förmigen Halteteils 3 auf die geschlossene Seite gerichtet.

Bei dem in Fig. 6 dargestellten Halteteil 3 ist ein Bolzen 31 vorgesehen, dessen Längsachse die Schwenkachse 21 des Halteteils 3 bildet. Der Bolzen 31 kann aus Vollmaterial bestehen oder hülsenförmig ausgebildet sein. Der Bolzen 31 dient gleichzeitig der Verstärkung des Halteteils 3 und erhöht dessen Steifigkeit. Es ist aber alternativ denkbar und möglich, die Schwenkachse 21 durch einzelne drehgelagerte Verbindungen zwischen Stellteils 4 und Halteteil 3, beispielsweise durch zwei einzelne Nietverbindungen, auszubilden. Dies wird insbesondere in dem Fall erforderlich, in dem die Schwenkachse 21 die Lenkspindel 2 schneidet.

Auf dem unteren ebenen Flächenabschnitt 8e des Halteteils 3 ist ein Losbrechelement 32 angeordnet. Das Losbrechelement 32 bildet einen Längsanschlag für das Stellteil 4, d.h. wenn das Stellteil 4 in das Halteteil 3 entsprechend weit eingeschoben wird, kommt es an dem Losbrechelement 32 zur Anlage und stützt sich an diesem ab. Erst nach Überschreiten einer definierten Kraft in Axialrichtung bricht das Losbrechelement 32 weg und gibt den Weg für eine weitere Axialverschiebung des Stellteils 4 relativ zum Halteteil 3 frei. Erst nach dem Wegbrechen des Losbrechelementes kann das Stellteil 4 in die Crashsicken 22a, 22b einfahren und die Wandflächen 3a, 3b am Halteteil 3 und/oder die Crashsicken 22a, 22b unter Energieaufzehrung verformen.

Das Losbrechelement kann auf verschiedene Arten ausgebildet sein. In der bevorzugten Ausführungsform ist das Losbrechelement 32 als Kunststoffzapfen ausgebildet, der in das Halteteil 3 eingepresst ist und in die Öffnung, die das Halteteil 3 umschließt, hineinragt. Alternativ kann das Losbrechelement 32' (vergleiche Figur 1) am Stellteil 4 angeordnet sein und die Verschiebung des Stellteils 4 gegenüber dem Halteteil 3 durch den Anschlag am Spannbolzen 9 begrenzen. Im Crashfall übersteigt die Verschiebekraft die Widerstandskraft des Losbrechelements und das Losbrechelement schert ab, sodass die weitere Verschiebung des Stellteils 4 gegenüber dem Halteteil 3 ermöglicht ist.

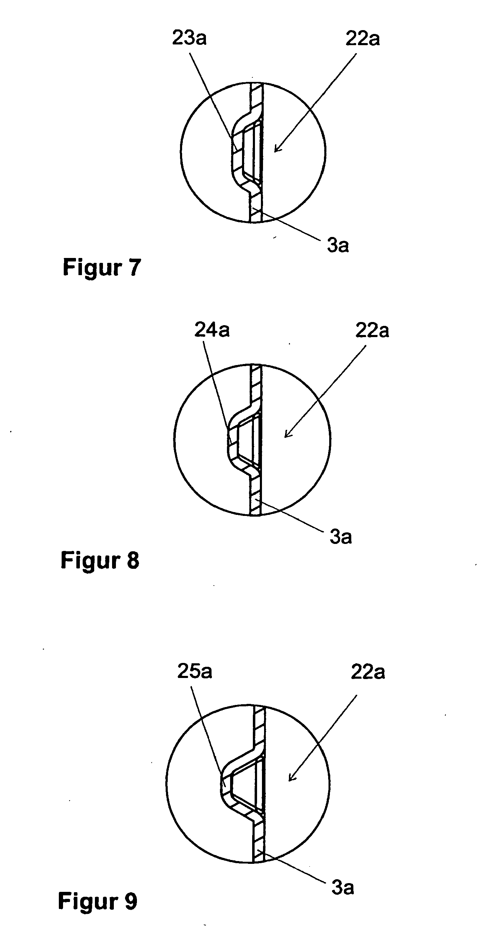

In den Fig. 7, 8 und 9 sind unterschiedliche Schnitte durch die Crashsicke 22a dargestellt. In Fig. 7 verläuft der Schnitt durch die Auflauframpe 23a der Crashsicke, während in Fig. 8 der Schnitt durch die höchste Erhebung der Crashsicke, nämlich den First 24a, verläuft. In Fig. 9 verläuft der Schnitt durch die Stützrampe 25a. Aus den Fig. 7 bis 9 wird deutlich, dass die einzelnen Abschnitte der Crashsicke 22a unterschiedlich ausgeformt sind, d.h. die einzelnen Abschnitte der Crashsicke 22a weisen unterschiedliche Querschnittsformen auf. Die Querschnittsform der Stützrampe 25 ist, zusätzlich zum Anstellwinkel der Stützrampe relativ zur Wandfläche 3a, ein weiterer Parameter, über den der Konstrukteur beeinflussen kann, welche Energiemenge im Crashfall von der Crashsicke absorbiert wird.

Besonders vorteilhaft kann über den Verlauf der Höhe der Auflauframpe 23a, 23b über die Länge die Höhe der Widerstandskraft gegen eine weitere Verschiebung des Stellteils 4 gegenüber dem Halteteil 3 im Crashfall am jeweiligen momentanen Ort der Verschiebung eingestellt werden. Auf diese Weise kann ein definierter Kraftverlauf vorbestimmt werden.

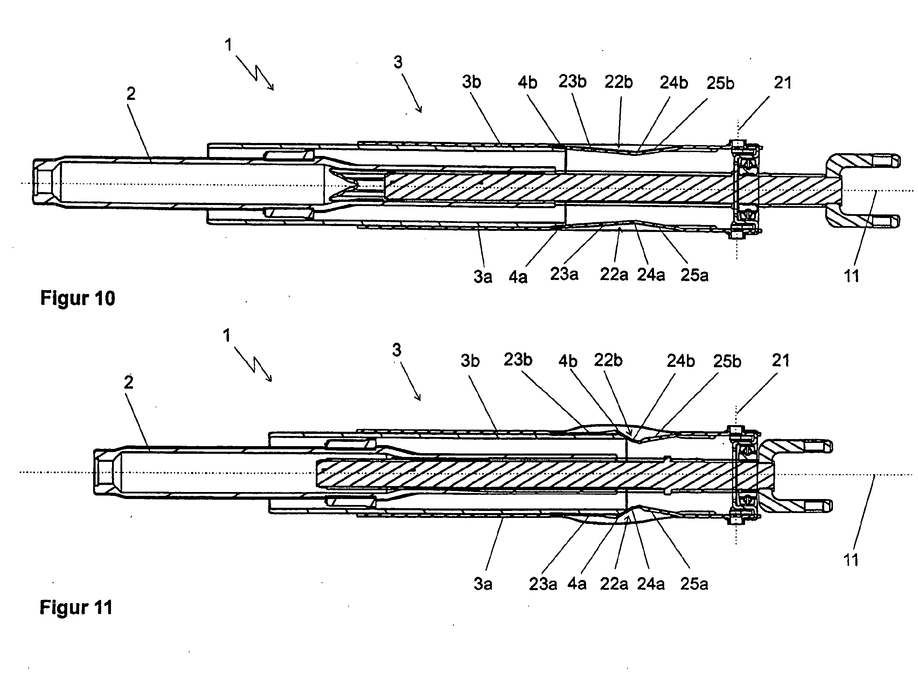

Fig. 10 zeigt die erfindungsgemäße Lenksäule 1 im zusammengebauten Zustand. In dem in Fig. 10 dargestellten Zustand weist die Lenksäule 1 ihre im normalen Betriebszustand, also nicht im Crashfall, geringste axiale Erstreckung auf. Das Stellteil 4 ist so weit in das Halteteil 3 eingeschoben, dass es mit seiner Außenwand, insbesondere mit seinen Widerstandselementen 4a, 4b an dem Anfang der Crashsicken 22a, 22b anliegt. Würde nun in Fig. 10 von links kommend ein Stoß auf die Lenkspindel 2 einwirken, so würde sich das Stellteil 4 relativ zum Halteteil 3 unter Verformung der Crashsicken 22a, 22b verschieben. Dabei würde die im Crashfall frei werdende kinetische Energie des Stellteils 4 allmählich mit zunehmender Verformung der Crashsicken 22a, 22b aufgezehrt werden. Auf diese Weise wird das Verletzungsrisiko für den Fahrer reduziert.

Fig. 11 zeigt den Zustand der Lenksäule gemäß Fig. 10 nach erfolgtem .Crash. In der Figur 11 sind dabei sowohl die Verformung der Crashsicken 22a, 22b als auch die Verformung der Wandflächen 3a, 3b dargestellt. Insbesondere sind die Wandflächen 3a, 3b im Bereich der Crashelemente aufgeweitet. Je nach den konstruktiven Gegebenheiten kann es gewünscht sein, die Verformung der Crashelemente, hier die Crashsicken 22a, 22b, oder der Wandflächen 3a, 3b, in denen die Crashelemente angeordnet sind, einzuschränken oder gar zu verhindern. Der Fachmann kann dies durch die entsprechende Auslegung des Crashelements und der Wandflächen erreichen.

Es ist offensichtlich, dass bei Anwendung von Crashsicken 22a 22b als Crashelement, bei den üblichen Blechstärken im Bereich von 1 mm bis 2mm, das Crashelement außerordentlich steif ist und daher nur mit erheblicher Flächenpressung verformt werden kann. Die Genauigkeit der Festlegung des Kraftniveaus hängt dabei sehr stark von der Genauigkeit der Ausbildung der Crashelemente ab. Im Falle, dass eine Verformung der Wandflächen 3a, 3b zur Energieaufzehrung vorgesehen ist, ist im Vergleich die Anforderung an die Toleranz bezügliche Maßhaltigkeit und Werkstoffeigenschaft nicht so hoch.

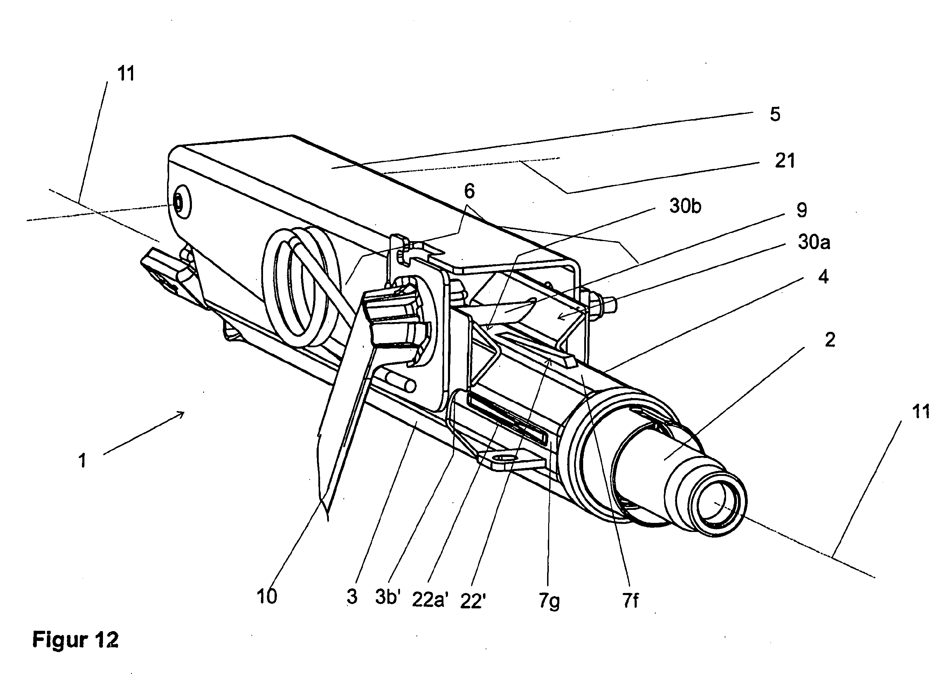

Fig. 12 zeigt eine alternative Ausführungsform der Erfindung, bei der ein Crashelement 22' in einer Wandfläche 7f und ein weiteres Crashelement 22a' in einer Wandfläche 7g im Stellteil 4 angeordnet sind. Als Widerstandselement im Crashfall dient entweder eine Außenfläche 3b', die am Halteteil 3 angeordnet ist oder einfach der Spannbolzen 9, der gegenüber dem Halteteil 3 in Richtung der Längsachse 12 des Halteteils 3 unverschiebbar angeordnet ist. Diese alternative Ausführungsform ist auch bei Stellteilen 4 mit einer kreisrunden oder anders geformten äußeren Querschnittfläche anwendbar. Die zuvor getroffenen Aussagen für Merkmale in den anderen Ausführungsformen der Erfindung lassen sich analog auf diese Ausführungsform übertragen.

Darüber hinaus kann die Erfindung auch für Lenksäulen angewendet werden, bei denen die Lenkspindel in Bezug zum Halteteil nur in eine Höhen- oder Längsrichtung oder im normalen Betriebszustand, also ausgenommen im Crashfall, überhaupt nicht verstellbar angeordnet ist. Derartige Lenksäulen können derart ausgelegt sein, dass nach Überschreiten einer vorgegebenen Kraft, eine Verschiebung der Lenkspindel und entsprechend des die Lenkspindel tragenden Stellteils in Längsrichtung ermöglicht wird. Erfindungsgemäß sind dann im Halteteil oder im die Lenkspindel tragenden Stellteil ein oder mehrere entsprechende Crashelemente vorgesehen, die eine entsprechende Widerstandskraft gegen eine Verschiebung des Stellteils gegenüber dem Halteteil entgegensetzen.

### Bezugszeichenliste

- 1.: Lenksäule
- 2.: Lenkspindel
- 3.: Halteteil
- 3a, 3b: Wandfläche
- 3b': Außenfläche
- 4.: Stellteil
- 4a, 4b: Widerstandselemente
- 5.: Halteklammer
- 6.: Klemmeinrichtung
- 7c, 7d: ebene Flächenabschnitte
- 7f, 7g: Wandfläche
- 8a,b,c,d,e: ebene Flächenabschnitte
- 9.: Spannbolzen
- 10.: Stellhebel
- 11.: Längsachse, Stellteil
- 12.: Längsachse, Halteteil
- 13.: Schlitz
- 21.: Schwenkachse
- 22': Crashsicke
- 22a, 22b: Crashsicke
- 22a': Crashsicke
- 23a, 23b: Auflauframpe
- 24a, 24b: First
- 25a, 25b: Stützrampe
- 26a, 26b: Verstärkungssicke
- 27.: Ausnehmung
- 28.: Ausnehmung
- 30a, 30b: Klemmelement
- 31.: Bolzen
- 32., 32': Losbrechelement

## Patentansprüche

1. Lenksäule (1) für ein Kraftfahrzeug, umfassend
a) eine Lenkspindel (2), die um ihre Längsachse (11) drehbar in einem Stellteil (4) gelagert ist, wobei das Stellteil (4) mindestens ein erstes Widerstandselement (4a) aufweist,
b) ein Halteteil (3), welches mindestens eine Wandfläche (3a) aufweist, wobei das Stellteil (4) im zusammengebauten Zustand der Lenksäule (1) innerhalb des Halteteils (3) zumindest im Crashfall in Axialrichtung verschiebbar geführt angeordnet ist und das erste Widerstandselement (4a) des Stellteils (4) der Wandfläche (3a) zugeordnet ist, **dadurch gekennzeichnet,**
c) **dass** die mindestens eine Wandfläche (3a) des Halteteils (3) ein in Richtung Stellteil (4) vorstehendes Crashelement (22a; 22b) aufweist, welches von dem Stellteil (4) bei einer im Crashfall auftretenden Relativverschiebung zwischen dem Stellteil (4) und dem Halteteil (3) unter Energieabbau selbst verformbar ist und/oder die Wandfläche (3a) des Halteteils (3) unter Energieabbau verformt,
d) wobei das Crashelement (22a, 22b) an seinem dem Stellteil (4) zugewandten Ende eine Auflauframpe (23a, 23b) aufweist und sich an die Auflauframpe (23a, 23b) ein First (24a, 24b) anschließt, welcher die höchste Erhebung des Crashelementes (22a, 22b) gegenüber der Wandfläche (3a) bildet.

2. Lenksäule (1) für ein Kraftfahrzeug, umfassend
a) eine Lenkspindel (2), die um ihre Längsachse (11) drehbar in einem Stellteil (4) gelagert ist, wobei das Stellteil (4) mindestens eine erste Wandfläche (7f, 7g) aufweist,
b) ein Halteteil (3), welches mindestens ein Widerstandselement (9) aufweist, wobei das Stellteil (4) im zusammengebauten Zustand der Lenksäule (1) innerhalb des Halteteils (3) zumindest im Crashfall in Axialrichtung verschiebbar geführt angeordnet ist und die erste Wandfläche (7f, 7g) des Stellteils (4) dem Widerstandselement (9) zugeordnet ist, **dadurch gekennzeichnet,**
c) **dass** die mindestens eine Wandfläche (7f, 7g) des Stellteils (4) ein in Richtung Halteteil (3) vorstehendes Crashelement (22'; 22a') aufweist, welches bei einer im Crashfall auftretenden Relativverschiebung zwischen dem Stellteil (4) und dem Halteteil (3) unter Energieabbau selbst verformbar ist und/oder die Wandfläche (7f) des Stellteils (4) unter Energieabbau verformt,
d) wobei das Crashelement (22', 22a') an seinem dem Halteteil (3) zugewandten Ende eine Auflauframpe (23a, 23b) aufweist und sich an die Auflauframpe (23a, 23b) ein First (24a, 24b) anschließt, welcher die höchste Erhebung des Crashelementes (22', 22a') gegenüber der Wandfläche (7f, 7g) bildet.

3. Lenksäule nach Anspruch 1 und/oder 2 **dadurch gekennzeichnet, dass** die Lenksäule in zumindest einer Verstellrichtung verstellbar ist und eine öffen-und schließbare Klemmeinrichtung (9, 10, 30a, 30b), vorgesehen ist, wobei das Stellteil (4) relativ zu dem Halteteil (3) bei geöffneter Klemmeinrichtung (9, 10, 30a, 30b) in axialer Richtung verschiebbar und bei geschlossener Klemmeinrichtung (9, 10, 30a, 30b) axial fixiert gehalten ist.

4. Lenksäule nach einem der vorhergehenden Ansprüche, **dadurch gekennzeichnet, dass** das Crashelement (22a; 22b; 22'; 22a') als in die Wandfläche (3a, 7f) eingeformte Crashsicke (22a, 22b; 22'; 22a') ausgebildet ist.

5. Lenksäule nach einem der voranstehenden Ansprüche, **dadurch gekennzeichnet, dass** die mindestens eine Wandfläche (3a) des Halteteils (3) zusätzlich zu dem Crashelement (22 a; 22b; 22'; 22a') eine Verstärkungssicke (26a, 26b) aufweist.

6. Lenksäule nach einem der voranstehenden Ansprüche, **dadurch gekennzeichnet, dass** sich an den First (24a, 24b) eine abfallende Stützrampe (25a, 25b) anschließt.

7. Lenksäule nach einem der vorhergehenden Ansprüche, **dadurch gekennzeichnet, dass** das Stellteil (4) eine oktogonale Querschnittsform aufweist und dass das Halteteil eine im Wesentlichen U-förmige Querschnittsform aufweist, wobei die mindestens eine einen Schenkel des U-förmigen Halteteils (3) bildende Wandfläche (3a, 3b) das Crashelement (22a, 22b) aufweist.

## Claims

1. Steering column (1) for a motor vehicle, comprising:
a) a steering spindle (2) which is mounted so as to be able to rotate about its longitudinal axis (11) within an operating element (4), wherein the operating element (4) has at least one first resistance element (4a),
b) a holding part (3) which has at least one wall surface (3a), wherein, when the steering column (1) is in the assembled state, the operating element (4) is disposed within the holding part (3) so as to be displaceably guided in the axial direction at least in the event of a crash, and the first resistance element (4a) of the operating element (4) is allocated to the wall surface (3 a) **characterised in that**
c) the at least one wall surface (3a) of the holding part (3) has a crash element (22a; 22b) which protrudes in the direction of the operating element (4), can itself be deformed in an energy-degrading manner by the operating element (4) upon relative displacement between the operating element (4) and the holding part (3) which occurs in the event of a crash, and/or deforms the wall surface (3a) of the holding part (3) in an energy-degrading manner,
d) wherein the crash element (22a, 22b) has a run-up slope (23a, 23b) on its end facing the operating element (4), and a ridge (24a, 24b) adjoins the run-up slope (23a, 23b) and forms the highest elevation of the crash element (22a, 22b) with respect to the wall surface (3a).

2. Steering column (1) for a motor vehicle, comprising:
a) a steering spindle (2) which is mounted so as to be able to rotate about its longitudinal axis (11) within an operating element (4), wherein the operating element (4) has at least one first wall surface (7f, 7g),
b) a holding part (3) which has at least one resistance element (9), wherein, when the steering column (1) is in the assembled state, the operating element (4) is disposed within the holding part (3) so as to be displaceably guided in the axial direction at least in the event of a crash, and the first wall surface (7f, 7g) of the operating element (4) is allocated to the resistance element (9) **characterised in that**
c) the at least one wall surface (7f, 7g) of the operating element (4) has a crash element (22'; 22a') which protrudes in the direction of the holding part (3), can itself be deformed in an energy-degrading manner upon relative displacement between the operating element (4) and the holding part (3) which occurs in the event of a crash, and/or deforms the wall surface (7f) of the operating element (4) in an energy-degrading manner,
d) wherein the crash element (22', 22a') has a run-up slope (23a, 23b) on its end facing the holding part (3), and a ridge (24a, 24b) adjoins the run-up slope (23a, 23b) and forms the highest elevation of the crash element (22', 22a') with respect to the wall surface (7f, 7g).

3. Steering column as claimed in claim 1 and/or 2, **characterised in that** the steering column is adjustable in at least one adjustment direction and an openable and closable clamping device (9, 10, 30a, 30b) is provided, wherein the operating element (4) is displaceable in the axial direction relative to the holding part (3) when the clamping device (9, 10, 30a, 30b) is opened and is held in an axially fixed manner when the clamping device (9, 10, 30a, 30b) is closed.

4. Steering column as claimed in any one of the preceding claims, **characterised in that** the crash element (22a; 22b; 22'; 22a') is formed as a crash bead (22a, 22b; 22'; 22a') formed into the wall surface (3a, 7f).

5. Steering column as claimed in any one of the preceding claims, **characterised in that** the at least one wall surface (3a) of the holding part (3) has a reinforcing bead (26a, 26b) in addition to the crash element (22a; 22b; 22'; 22a').

6. Steering column as claimed in any one of the preceding claims, **characterised in that** a descending support slope (25a, 25b) adjoins the ridge (24a, 24b)

7. Steering column as claimed in any one of the preceding claims, **characterised in that** the operating element (4) has an octagonal cross-sectional shape and that the holding part has a substantially U-shaped cross-sectional shape, wherein the at least one wall surface (3a, 3b) forming a limb of the U-shaped holding part (3) comprises the crash element (22a, 22b).

## Revendications

1. Colonne de direction (1) pour un véhicule automobile, laquelle comprend
a) un arbre de direction (2), qui est monté en rotation autour de son axe longitudinal (11) dans une pièce d'actionnement (4), ladite pièce d'actionnement (4) présentant au moins un premier élément de résistance (4a),
b) une pièce de maintien (3), qui présente au moins une surface de paroi (3a), la pièce d'actionnement (4) pouvant être déplacée dans la direction axiale, à l'intérieur de la pièce de maintien (3), au moins en cas de collision, quand la colonne de direction (1) est à l'état monté, et le premier élément de résistance (4a) de la pièce d'actionnement (4) étant associé à la surface de paroi (3a),
**caractérisée en ce que**
c) que la surface de paroi (3a) de la pièce de maintien (3) au moins prévue présente un élément d'absorption de choc (22a, 22b) en saillie en direction de la pièce d'actionnement (4), qui, sous l'effet d'un déplacement relatif se produisant lors d'une collision entre la pièce d'actionnement (4) et la pièce de maintien (3) peut être déformé lui-même par la pièce d'actionnement (4) en absorbant de l'énergie et / ou déformer la surface de paroi (3a) de la pièce de maintien (3) en absorbant de l'énergie,
d) l'élément d'absorption de choc (22a, 22b) présente, à son extrémité orientée vers la pièce d'actionnement (4), une rampe d'accès (23a, 23b), et qu'un faîte (24a, 24b), qui forme le point le plus élevé de l'élément d'absorption de choc (22a, 22b) par rapport à la surface de paroi (3a), se raccorde à la rampe d'accès (23a, 23b).

2. Colonne de direction (1) pour un véhicule automobile, laquelle comprend
a) un arbre de direction (2), qui est monté en rotation autour de son axe longitudinal (11) dans une pièce d'actionnement (4), ladite pièce d'actionnement (4) présentant au moins une première surface de paroi (7f, 7g),
b) une pièce de maintien (3), qui présente au moins un élément de résistance (9), la pièce d'actionnement (4) pouvant être déplacée dans la direction axiale, à l'intérieur de la pièce de maintien (3), au moins en cas de collision, quand la colonne de direction (1) est à l'état monté, et la première surface de paroi (7f, 7g) de la pièce d'actionnement (4) étant associée à l'élément de résistance (9),
**caractérisée en ce que**
c) la première surface de paroi (7f, 7g) de la pièce d'actionnement (4) au moins prévue présente un élément d'absorption de choc (22', 22a') en saillie en direction de la pièce de maintien (3), qui, sous l'effet d'un déplacement relatif se produisant lors d'une collision, entre la pièce d'actionnement (4) et la pièce de maintien (3), peut se déformer lui-même en absorbant de l'énergie et / ou déformer la première surface de paroi (7f) de la pièce d'actionnement (4) en absorbant de l'énergie.
d) l'élément d'absorption de choc (22', 22a') présente, à son extrémité orientée vers la pièce de maintien (3), une rampe d'accès (23a, 23b), et qu'un faite (24a, 24b), qui forme le point le plus élevé de l'élément d'absorption de choc (22', 22a') par rapport à la surface de paroi (7f, 7g), se raccorde à la rampe d'accès (23a, 23b).

3. Colonne de direction selon les revendications 1 et / ou 2, **caractérisée en ce que** ladite colonne de direction peut être déplacée dans au moins une direction de réglage et qu'un dispositif de serrage (9, 10, 30a, 30b) est prévu, la pièce d'actionnement (4) pouvant être déplacée dans la direction axiale par rapport à la pièce de maintien (3) quand le dispositif de serrage (9, 10, 30a, 30b) est ouvert et étant maintenue, fixée axialement, quand le dispositif de serrage (9, 10, 30a, 30b) est fermé.

4. Colonne de direction selon l'une des revendications précédentes, **caractérisée en ce que** l'élément d'absorption de choc (22a, 22b ; 22' ; 22a') est conçu en tant que moulure d'impact (22a, 22b ; 22' ; 22a') pratiquée dans la surface de paroi (3a, 7f).

5. Colonne de direction selon l'une des revendications précédentes, **caractérisée en ce que** la surface de paroi (3a) de la pièce de maintien (3) au moins prévue présente, en plus de l'élément d'absorption de choc (22a ; 22b ; 22' ; 22a') une moulure de renforcement (26a, 26b).

6. Colonne de direction selon l'une des revendications précédentes, **caractérisée en ce qu'**une rampe d'appui (25a, 25b) en pente descendante fait suite au faîte (24a, 24b).

7. Colonne de direction selon l'une des revendications précédentes, **caractérisée en ce que** la pièce d'actionnement (4) présente une section transversale octogonale et que la pièce de maintien présente une section transversale sensiblement en U, la surface de paroi (3a, 3b), qui forme au moins une aile de la pièce de retenue (3) en U étant équipée de l'élément d'absorption de choc (22a, 22b).
